# EUROPEAN PATENT APPLICATION

(11) **EP 1 498 805 A2**
(43) Date of publication of application: **19.01.2005**
(21) Application number: 04254239.9
(22) Date of filing: 15.07.2004
(51) Int. Cl.: G06F 3/02, H01H 13/70

(54) **Mobile electronic device keypad**

(30) Priority: 15.07.2003 GB 0316548
(71) Applicant: Research In Motion Limited, Waterloo, Ontario N2L 3W8 (CA)
(72) Inventor: Fyke, Steven H., Fort Erie, Ontario L2A 4S8 (CA); Ladouceur, Norman M., Waterloo, Ontario N2T 1A2 (CA)
(74) Representative: Hibbert, Juliet Jane Grace

(57) **Abstract**

A keypad for a mobile electronic device is provided. A frame includes ridges defining a set of locations for housing actuators. A set of actuators is supported on the frame at the set of locations. In operation, the ridges assist to guide the user's fingers or thumbs to one of the actuators while the user is typing on the keypad.

## Description

### FIELD OF THE INVENTION

The present invention relates generally to mobile electronic devices. More particularly, the present invention relates to an improved keypad for a mobile electronic device.

### BACKGROUND OF THE INVENTION

In recent years, mobile electronic devices have been becoming a very popular communication tool. Providing users the capability to both transmit and receive messages while they are out of the office, for example, has been very advantageous. Moreover, such devices are also often used as an organizer, a notebook and even an address book. The input of data into the device generally occurs via different methods. One may be via a writing implement and touch sensitive screen while another method is to connect the mobile electronic device with a computer either through a wireless or serial connection. Yet another method of entering data into the device is via a keypad either attached to or assembled within the device. The keypad is used in a similar manner to a keyboard where a user depresses actuators (seen as keys on a keypad or keyboard), in order to enter the required data into the memory of the mobile electronic device.

In order to interact with the mobile electronic device using the keypad, the user generally types in text using the keypad. The keypads are usually located below the screen of the mobile electronic device so that the user may view what they are typing and make the necessary changes if the wrong key, or actuator, is depressed. This generally occurs when the user is typing quickly. Presently, there are many different keypads that are available in the art.

For instance, some mobile electronic devices have keypads that comprise of separate keys for each alpha-numeric character. The keys in these keypads are generally manufactured out of rubber with hard caps with the feel of keys on a computer keyboard. Another known keypad is manufactured out of rubber. In most cases, the keypads comprise a rubber cover covering a set of actuators representing alpha-numeric characters, but this cover does not provide any support to the actuators and therefore the actuators may shift while the user is typing.

In some cases, the keys are so small that if a user is typing quickly, they may depress two keys at once or may depress the wrong key which results in a spelling error and requires the user to correct their misspelled words which may be time consuming. Small keys also tend to be uncomfortable to type on.

### SUMMARY OF THE INVENTION

According to one aspect of the invention, a keypad for a mobile electronic device comprises a frame including ridges defining a set of locations for housing actuators, a set of actuators, and means for supporting said actuators on said frame at said set of locations.

In accordance with a further aspect of the invention, a mobile electronic device comprises a display screen, and a keypad comprising a frame including ridges defining a set of locations for housing actuators, a set of actuators, and means for supporting said actuators on said frame at said set of locations.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

Embodiments of the present invention will now be described, by way of example only, with reference to the attached Figures, wherein:
Figure 1 is a front view of a mobile electronic device housing a keypad in accordance with an aspect of the present invention.
Figures 2a to 2c are views of a first embodiment of the keypad of Figure 1.
Figures 3a to 3c are views of another embodiment of the keypad of Figure 1.
Figures 4a to 4c are views of a further embodiment of the keypad of Figure 1.

### DETAILED DESCRIPTION

Generally, a keypad for a mobile electronic device comprising ridges to direct a user's fingers towards a set of actuators while typing is provided. Many times, when a user is quickly typing input text, the user's fingers miss an intended key and either a letter is omitted or the wrong letter is typed. With the ridges, a user's fingers or thumbs are gently guided toward intended target actuators so that entered text contains fewer errors. The ridges also provide an illusion of independent or suspended keys in the keypad when, in actual fact, there is an internal frame that supports all of the actuators. The terms "keys" and "actuators" are used interchangeably because keys are generally referred to when one is talking about a keypad or keyboard while the actuators are the parts which are located under the keys and contact a circuit board or compress a metal dome, for example, when a key is depressed to actuate the circuit board to transmit signals to a processor indicating which key was pressed.

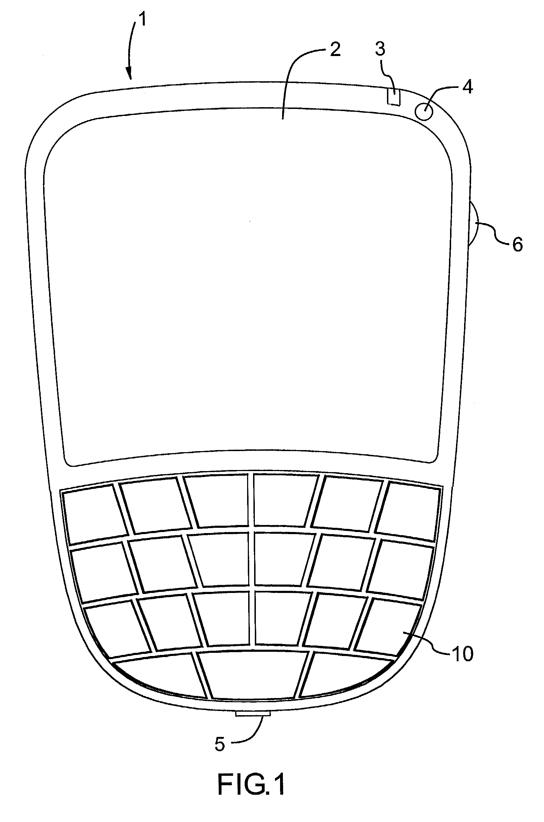

Turning to Figure 1, a diagram of a mobile electronic device **1** housing a keypad **10** in accordance with an aspect of the present invention is shown. Users generally use their mobile electronic devices to send and receive messages, as a notebook, as an address book or as an organizer, among other functions. In order to create messages or to enter other information into the memory of the device such as an address for the address book, users interact with the keypad **10**. The mobile electronic device **1** further comprises a display, or screen, **2** for displaying text messages, documents and the like to the user along with a light **3** for indicating when a message is received and a power button **4** for turning the device **1** on and off. A serial port **5** is provided so that the device **1** may be connected with a computer or another mobile electronic device for the transmission and reception of data. Alternatively, the device **1** may be connected to other devices via a wireless connection. In order to wirelessly receive messages from another device, the mobile electronic device **1** includes a wireless modem (not shown) installed within the device. The hardware and software required to allow devices to communicate will be well understood by one skilled in the art. The device **1** may also include a cancel button **6** which allows the user to cancel any previous action or keystroke in a manner similar to a backspace key for a keyboard. Although various features of the mobile electronic device have been described, it will be understood that there may be other features available for the device which are not presently described. Examples of a mobile electronic device include a data communication device, a voice communication device, a multiple-mode communication device such as a mobile telephone having data communications functionality, a personal digital assistant (PDA) enabled for wireless communications, a one-way or two-way pager, and a wireless email communication device.

In general, the keypad **10** provides the same functionality for the mobile electronic device **1** that a keyboard provides for a computer. Due to the size of the mobile electronic device **1**, a user typically either grasps the device in one hand and uses the thumb of that same hand to interact with the keypad or grasps the device using both hands and uses both thumbs to interact with the keypad **10**. Alternatively, a user may hold the device with one hand while using the free hand to interact with the keypad **10**.

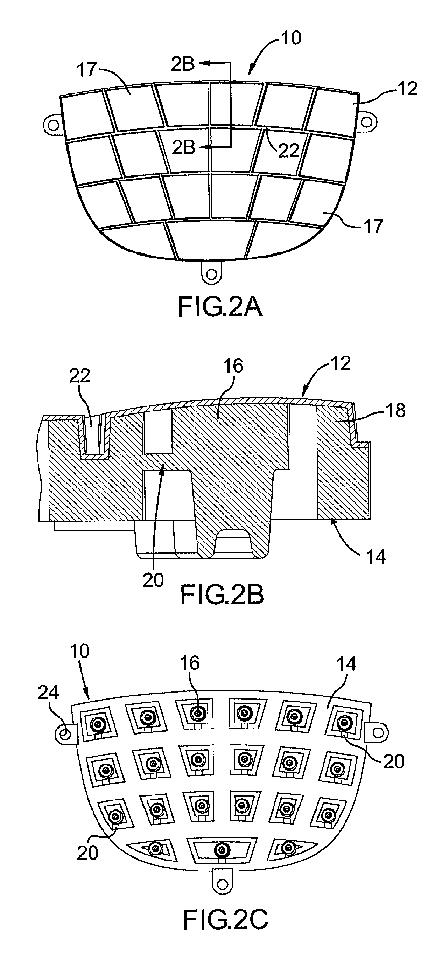

Turning to Figures 2a to 2c, various views of a first embodiment of the keypad **10** for use with the mobile electronic device **1** is shown. Figure 2a is a front view of the keypad **10** with a cover **12**, while Figure 2b is a cross-sectional view of the keypad taken along the line 2b-2b of Figure 2a and Figure 2c is a rear view of the keypad **10**. The keypad **10** comprises a frame **14** housing a set of actuators **16** with ridges **18** which define the location of the actuators **16** within the frame **14**. Each of the actuators **16** is connected to the frame **14** via a hinge **20**. The cover **12**, which in one embodiment is a thin flexible material such as a mylar film, includes key locations **17** corresponding to each one of the actuators **16**. Preferably, the cover **12**, at each key location **17**, includes markings to describe the alphanumeric characters represented by its corresponding actuator. The cover **12** also provides a visual effect to the user that the keys are independent and suspended within the mobile electronic device **1** rather than supported by the frame **14**. The cover **12** is preferably water resistant and reduces the likelihood of loose particles entering the mobile electronic device **1**, which may affect the operation of the keypad **10** and/or the mobile electronic device **1**.

As can be seen most clearly in Figure 2b, each ridge **18** includes a depression **22** which assists in the provision of the visual effect to the user that the keys are independent and suspended. In this embodiment, the frame **14**, hinges **20** and actuators **16** are set in a one-shot mould which reduces the amount of plastic tooling required to manufacture the keypad **10** for the mobile electronic device **1**.

When the user depresses one of the actuators **16**, by pressing the corresponding key location **17**, the ridges **18**, defining the location of the selected key location **17** assist to guide the user's fingers onto the actuator **16** while also providing support to the frame **14** and the key location **17**. As will be understood by one skilled in the art, each of the actuators **16** corresponds to a switch located on a printed circuit board within the mobile electronic device **1**. When a user presses the key location **17**, the corresponding actuator is also depressed causing the actuator **16** to contact the switch. The switch then transmits a signal to a processor to identify the keystroke of the user, which subsequently displays an indication of the keystroke, such as a text character or number, for example, on the screen.

When the user is typing quickly, their fingers may not press down directly on the desired key location and therefore the ridges **18** act as a guide for the fingers so that preferably all keystrokes are correctly received by the processor.

The frame **14** also includes a set of holes **24** which are used to mount the keypad **10** within the mobile electronic device **1**.

It will be understood that there is no restriction on the number of actuators **16** within the frame **14**. The number of actuators is simply selected by the keypad designer or manufacturer. For example, in one embodiment, the keypad **10** has twenty-one actuators which indicates that at least one of the actuators represents a plurality of alpha-numeric characters. Fewer key locations **17** in the keypad **10** corresponds to a larger area for each key and as such a reduced chance of mistyping.

Having larger keys also facilitates a keypad layout whereby the keys are closer together, thus saving space. As described above, since there is not necessarily a one-to-one correspondence between each key and a single alpha-numeric character, technologies known in the art, such as predictive text and other keypad modes, may also be employed.

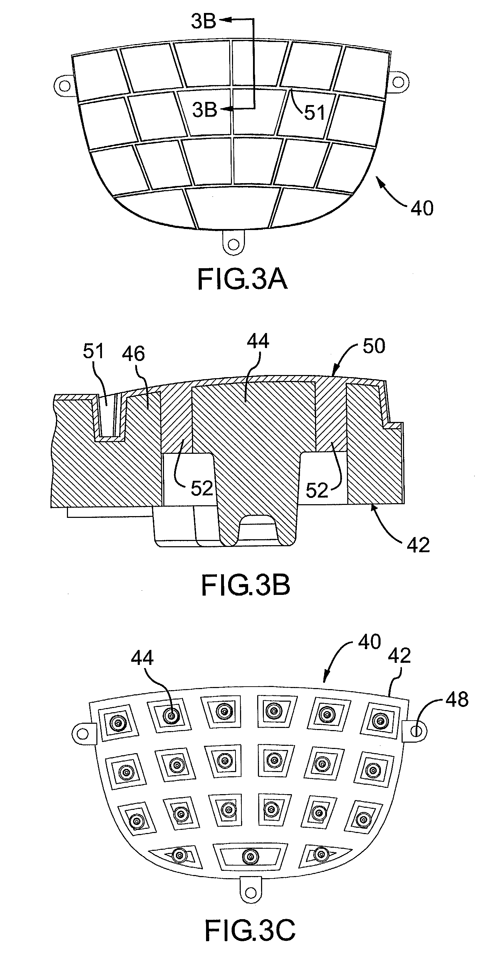

In a second embodiment, as shown in Figures 3a to 3c, a keypad **40** comprising a frame **42** housing a set of actuators **44** with ridges **46** defining the location of the actuators **44** within the frame **42** is shown. A set of holes **48** is also located on the edge of the frame **42** so that the keypad **40** may be mounted to the mobile electronic device **1** when it is installed. Figure 3a is a front view of the keypad **40** with a cover **50** while Figure 3b is a cross-sectional view of the keypad **40** taken along the line 3b-3b of Figure 3a. Figure 3c is a rear view of the keypad **40**.

The actuators **44** rest atop individual switches located on a circuit board within the mobile electronic device **1**. Each of the switches is in communication with the processor of the mobile electronic device to transmit signals indicating which keys have been depressed by the user so that the keystrokes may be displayed on the screen. As above, the ridges **46** both define the location for each of the actuators **44** and provide support for the actuators **44** in the frame **42**. As well, the construction of the keypad of the present embodiment allows for a low profile keypad. Depressions **51** also assist in providing the low profile for the keypad **10**.

The cover **50** and actuator supports **52** are constructed from a flexible material such as rubber. The cover **50** is preferably water resistant and reduces the number of particles entering the mobile electronic device **1**, which may affect operation of the device. The actuator supports **52**, located between the ridges **46** and the actuators **44**, support the actuators **44** in the frame **42** and suspend them in the key locations.

In this embodiment, the actuators **44** and the ridges **46** are separate from each other. However, the actuator supports **52** are supported on the ridges **46** so that the actuators **44** do not shift in a horizontal direction while the keypad **40** is in use. When depressed, the rubber actuators flex in a vertical direction in order to travel the necessary distance to activate their associated switches.

In this embodiment, the keypad may be manufactured using a 2-shot mould. A first shot of plastic fills in the frame **42**, actuators **44**, and the ridges **46** for the keypad **40** while a second shot of rubber fills in the area to provide the actuator supports **52** and the cover **50** thereby suspending the actuators in their appropriate locations. In this embodiment, the rubber adheres to the plastic to provide the necessary support for the actuators **44** in the frame **42**. Furthermore, other materials may be contemplated for the frame, the actuators and the cover with the basic requirement being that a stiff frame and actuators are created along with a flexible cover.

The present embodiment provides a keypad which has a visual effect of independent and suspended keys to the user when, in actual fact, there is an internal frame that supports the keys and actuators. This also allows for a low profile and rigid assembly. As in the other embodiment, the ridges assist in defining the location of the actuators so that when a user is typing, the ridges guide the user's fingers so that preferably no keystrokes are missed. When the frame is mounted securely to the mobile electronic device further rigidity is supplied to the frame by the mobile electronic device.

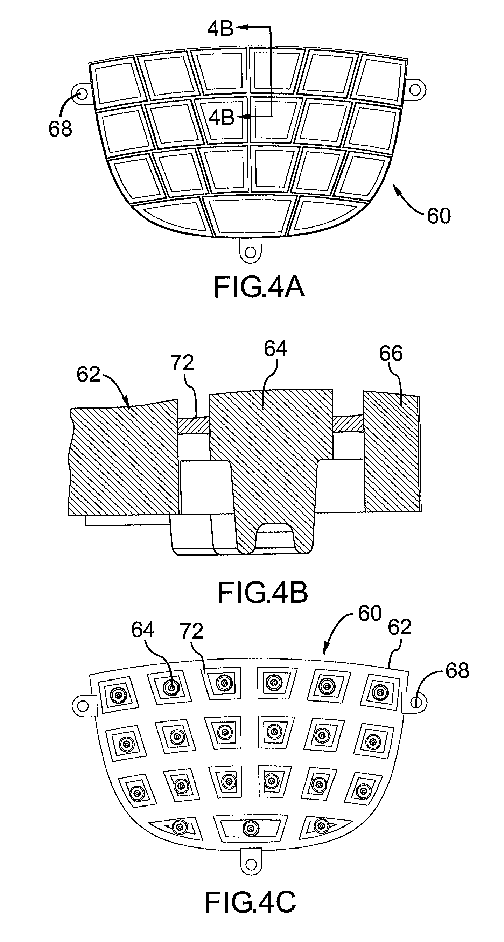

Turning to Figures 4a to 4c, a further embodiment of the keypad is shown. The keypad **60** comprises a frame **62** housing a set of actuators **64** with ridges **66** defining the location of the actuators **64** within the frame **62**. A set of holes **68** is also located on the edge of the frame **62** so that the keypad **60** may be mounted to the mobile electronic device **1**. Figure 4a is a front view of the keypad **60**, Figure 4b is a cross-sectional view of the keypad **60** taken along the line 4b-4b of Figure 4a, and Figure 4c is a rear view of the keypad frame **62**.

As in the preceding embodiments, the actuators **64** rest atop individual switches located on a circuit board within the mobile electronic device **1**. Each of the switches is in communication with the processor of the mobile electronic device to transmit signals indicating which keys have been depressed by the user so that the keystrokes may be displayed on the screen. The ridges **66** define the location for each of the actuators **64**. As well, the construction of the keypad of the present embodiment allows for a low profile keypad.

The keypad **60** also includes buttresses **72** which are preferably manufactured out of rubber and located between the frame **62** and the actuators **64**. The buttresses **72** provide support for the actuators **64** in the frame **62** in order to reduce the amount of horizontal shifting by the actuators **64** when the keypad is in use.

In this embodiment, the keypad **60** may be manufactured using a 2-shot mould, for example with a first shot of plastic to fill in the frame **62** and the actuators **64**, and a second shot of rubber to fill in the areas to provide the buttresses **72**. As above, the rubber adheres to the plastic to provide the necessary support for the actuators **64** in the frame **62**.

Another advantage of the keypads described herein is ease of manufacturing, since less tooling is required. These keypads also provides a tactile feel due to the presence of the ridges. Furthermore, the actuators are self-supported by the frame which produces a one-piece keypad in a preferred embodiment

It will be understood that although keypads have been described above with reference to a mobile electronic device, keypads according to aspects of the present invention may be installed in other types of devices as well, including a telephone, for example.

The above-described embodiments of the present invention are intended to be examples only. Alterations, modifications and variations may be effected to the particular embodiments by those of skill in the art without departing from the scope of the invention, which is defined solely by the claims appended hereto.

## Claims

1. A keypad for a mobile electronic device comprising:
a frame including ridges defining a set of locations for housing actuators;
a set of actuators; and
means for supporting said set of actuators on said frame at said set of locations.

2. The keypad of Claim 1 wherein said means for supporting comprises a set of hinges.

3. The keypad of Claim 1 or 2 further comprising a cover.

4. The keypad of Claim 3 wherein said means for supporting comprises actuator supports in said cover for supporting said actuators on said frame.

5. The keypad of Claim 1 wherein said means for supporting comprises a set of buttresses located between each of said actuators and said frame.

6. The keypad of Claim 3 or 4 wherein said cover is manufactured from mylar or rubber.

7. A mobile electronic device comprising:
a display screen; and
a keypad comprising
a frame including ridges defining a set of locations for housing actuators;
a set of actuators; and
means for supporting said actuators on said frame at said set of locations.
